Europäisches Patentamt

European Patent Office

Office européen des brevets

(11) Veröffentlichungsnummer : **0 048 965**
**B1**

# (12) EUROPÄISCHE PATENTSCHRIFT

(45) Veröffentlichungstag der Patentschrift :
09.01.85

(21) Anmeldenummer : 81107616.5

(22) Anmeldetag : 24.09.81

(51) Int. Cl.⁴ : **A 43 B 13/12**

(54) **Polstersohle mit orthopädischen Eigenschaften.**

(30) Priorität : 01.10.80 DE 3037108

(43) Veröffentlichungstag der Anmeldung :
07.04.82 Patentblatt 82/14

(45) Bekanntmachung des Hinweises auf die Patenterteilung : 09.01.85 Patentblatt 85/02

(84) Benannte Vertragsstaaten :
AT CH DE FR GB IT LI

(56) Entgegenhaltungen :
FR-A- 2 445 115
GB-A-  510 664

(73) Patentinhaber : **Funck, Herbert Dr.-Ing.**
**Am Wasserbogen 43**
**D-8032 Grafelfing-Lochham (DE)**

(72) Erfinder : **Funck, Herbert Dr.-Ing.**
**Am Wasserbogen 43**
**D-8032 Grafelfing-Lochham (DE)**

(74) Vertreter : **Patentanwälte Beetz sen. - Beetz jun.**
**Timpe - Siegfried - Schmitt-Fumian**
**Steinsdorfstrasse 10**
**D-8000 München 22 (DE)**

## Beschreibung

Die Erfindung betrifft eine Polstersohle wie er im ersten Teil des Anspruches 1 angegeben ist.

Derartige, auf einem oberen weichelastischen Polster und einer unteren zähelastischen Laufsohle bestehende Polstersohlen haben die Vorzüge eines relativ geringen Gewichtes, was auf das große Porenvolumen des Polsters zurückzuführen ist, und sind gegenüber Kompaktsohlen aufgrund der Nachgiebigkeit und der begrenzt federnden Eigenschaften der Polstereinlage außerordentlich bequem und fußgesund (GB-A-51 06 64). Dies gilt insbesondere für Schuhwerk mit einer sich bleibend verformenden Brandsohle, weil sich bereits nach kurzer Tragezeit der Trägerfuß durch Verformung der Brandsohle in die Polsterschicht hinein ein genau passendes Fußbett. formt. Diese in großen Stückzahlen bei unterschiedlichstem Schuhwerk verwendeten Polstersohlen sind jedoch aufgrund der nahezu gleichbleibenden Dicke der Polsterschicht über große Bereiche der Sohle hinweg nicht geeignet, um wirksame fußorthopädische Korrekturen zur Erhaltung oder Wiedergewinnung einer gesunden Fußstruktur zu erzielen. Derartige Korrekturwirkungen konnten bisher nur durch spezifisch geformte Einlagen in Verbindung mit Kompaktsohlen erreicht werden, die entweder als gesonderte Teile in den fertigen Schuh eingesetzt oder aber an die dem Oberschuh zugewandte Oberfläche der Kompaktlaufsohle angeformt wurden. Nachteilig bei diesen bekannten fußorthopädisch wirksamen Kompaktsohlen ist die Notwendigkeit, daß sie nur am Oberschuh verarbeitet werden können, wenn dessen Leisten auf seiner Unterseite eine Negativkontur aufweisen, was die Leisten- und Schuhherstellung stark verteuert. Darüber hinaus sind auch die orthopädischen Wirkungen begrenzt, da die obere Laufsohlenkontur den individuellen Fußformen nicht angepaßt sein kann, sondern vielmehr eine durchschnittsorthopädische Fußform aufweisen muß.

Aufgabe der Erfindung ist es, eine Polstersohle der eingangs genannten Art zu schaffen, die auf einfache Weise hergestellt werden kann und eine äußerst wirksame, sich den individuellen Bedürfnissen des jeweiligen Trägerfußes selbsttätig anpassenden orthopädische Stützfunktion aufweist.

Diese Aufgabe wird erfindungsgemäß durch die im kennzeichnenden Teil des Anspruches 1 angegebenen Merkmale gelöst.

Die besonderen Wirkungen der erfindungsgemäßen Polstersohle liegen darin, daß sich der Trägerfuß — ähnlich wie bei herkömmlichen Polstersohlen auch — sein individuelles Fußbett formen kann, wodurch ein dem Gehen auf Sand- oder Waldboden entsprechender Gehvorgang erreicht wird, daß jedoch durch die Profilierung der Laufsohlenoberseite besondere Stützzonen in gewissen Sohlenbereichen erzeugt werden, welche bei gleichzeitigem Erhalt optimaler Bequemlichkeit das Fußgewölbe im orthopädischen Sinn stützen können. Die Laufsohle enthält aufgrund der sich ändernden Dicke der nachgiebigen Polsterschicht eine sich über ihre Länge und Breite ändernde Nachgiebigkeit, wodurch einmal eine Anpassung an die individuellen Trägerfußformen und gleichzeitig ein wirksamer Halt des Trägerfußes erreicht werden.

Die vorteilhaften Eigenschaften der erfindungsgemäßen Polstersohlen sind besonders in Verbindung mit Oberschuhen wirksam, die eine unter dem Tragedruck und der Tragetemperatur des Trägerfußes bleibend verformbare Brandsohle vornehmlich aus Leder aufweisen, die auf der Oberseite der Polsterschicht großflächig aufliegt bzw. mit dieser großflächig fest verbunden ist. Beim Tragen eines derartigen Schuhwerkes wölbt sich die Brandsohle bevorzugt in diejenigen Sohlenbereiche hinein, in welchen durch das Polstermaterial ausgefüllte Vertiefungen in der Laufsohle vorgesehen sind, wobei jedoch das Fußgewölbe aufgrund der in diesen Sohlenbereichen relativ dünnen Polsterschicht wirksam abgestützt wird, da sich in diesen Bereichen die Brandsohle nur in geringem Maße verformen kann.

Da die erfindungsgemäße Polstersohle eine flache Oberfläche besitzt, kann sie ohne weiteres an einem auf einem normalen leistengezwickten Oberschuh befestigt werden. Damit stellt die neue Polstersohle eine ideale Kombination der vorteilhaften Eigenschaften bekannter Polstersohlen mit denen bekannter sog. Fußbettsohlen dar, wobei die Nachteile dieser bekannten Sohlentypen hinsichtlich ihrer Trageeigenschaften ebenso wie ihres Herstellungsaufwandes vermieden werden.

Bei der erfindungsgemäßen Polstersohle kann die weichelastische obere Polsterschicht seitlich bis zum Sohlenrand verlaufen. Für besonders hoch beanspruchtes Schuhwerk, wie z. B. Sport-, Arbeits- oder Sicherheitsschuhe, ist es jedoch nicht ratsam, die obere weichelastische Polsterschicht am äußeren Sohlenschnitt sichtbar heraustreten zu lassen, weil erfahrungsgemäß die höchsten mechanischen Beanspruchungen der Sohlen an ihren Rändern und Spitzen auftreten. Für derartiges Schuhwerk ist eine besondere Ausgestaltung der erfindungsgemäßen Polstersohle besonders geeignet, bei welcher die an ihrer Oberseite Fußorthopädisch geformte Laufsohlenschicht seitlich um die obere Polsterschicht aus Leichtschaum zu einem ganz oder teilweise umlaufenden Rand herumgezogen ist. Dieser Sohlenrand kann eine solche Höhe aufweisen, daß zur Befestigung des Oberschuhes ein schalenförmiges Bett entsteht. Auf diese Weise wird die mechanisch empfindliche obere Polsterschicht vor äußeren Beschädigungen geschützt und eine sichere Befestigung der Polstersohle am Oberschuh über die stabilere Polsterschicht ermöglicht.

Die erfindungsgemäße Polstersohle läßt sich auf verschiedene Weise herstellen. Bei Verwendung von Polyurethanschaum für wenigstens eine der beiden Sohlenschichten, welcher beim Aushärten nur einen geringen Formeninnendruck erzeugt, ist ein Herstellungsverfahren besonders geeignet, bei dem entweder die untere Laufsohlenschicht oder die obere Polsterschicht in einer Sohlen-Teilform ausgeschäumt wird, deren eine obere oder untere Begrenzungsfläche die fußorthopädisch profilierte Form besitzt. Nach dem Aushärten dieser Sohlenschicht wird in einer weiteren Verfahrensstufe die jeweils andere Sohlenschicht in einer Form ausgeschäumt, deren Innenraum die Form der fertigen Polstersohle hat. Beim zweiten Ausschäumvorgang erfolgt eine innige und durchgehende feste Verbindung zwischen der bereits vorgefertigten Sohlenschicht und der daran anschließend angeschäumten Sohlenschicht, wobei auch gleichzeitig eine Befestigung der Polstersohle am Oberschuh vorgenommen werden kann, wenn ein aufgeleisteter Oberschuh als Formdeckel verwendet wird. Dieses Vorgehen hat den Vorzug, daß jeweils nur ein Formenteil die fußorthopädisch profilierte Fläche aufweisen muß, wodurch sich die Formkosten erheblich vermindern. Selbstverständlich können auch beide Sohlenschichten gesondert hergestellt und mit ihren beiden profilierten Flächen verklebt werden.

Im folgenden werden Ausführungsbeispiele der Erfindung anhand der Zeichnung im einzelnen beschrieben. Es zeigen :

Figur 1 eine erste Ausführungsform einer an einem Oberschuh befestigten Polstersohle,

Figur 2 eine Draufsicht auf die Polstersohle nach Fig. 1 mit gestrichelt eingezeichneter verdeckter Höhenlinie,

Figur 3 die Sohle mit dem unteren Teil des Oberschuhes gemäß Fig. 1 im Querschnitt,

Figur 4 eine andere Polstersohlen-Ausführung im Längsschnitt,

Figuren 5 bis 7 Querschnitte V-V, VI-VI und VII-VII der Sohlenausführung nach Fig. 4.

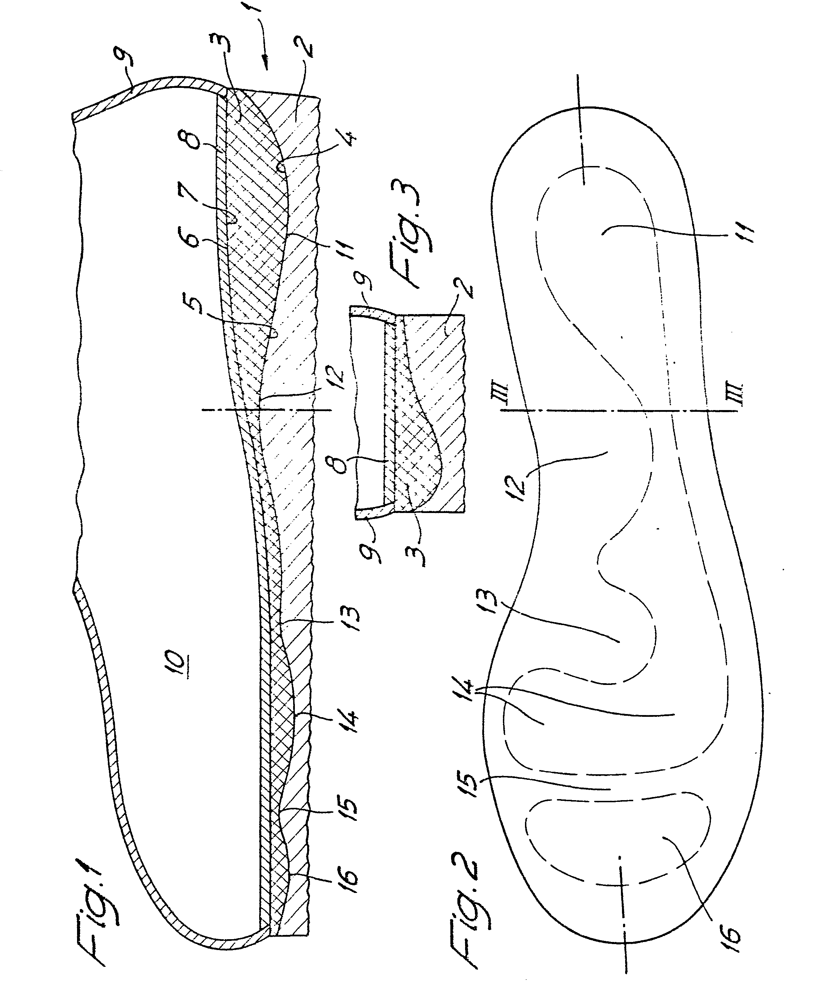

Die in den Fig. 1 bis 3 dargestellte Polstersohle 1 ist ein Verbundkörper, dessen untere Laufsohlenschicht 2 aus einem verschleißfesten zähelastischen Gummi- oder Kunststoffmaterial und dessen obere Polsterschicht 3 aus einem weichelastischen Weichschaum besteht. Die obere Fläche 4 der Laufsohlenschicht 2 und die untere Fläche 5 der Polsterschicht 3 haben einen übereinstimmenden profilierten Verlauf. Beide Sohlenschichten 2, 3 sind in dieser Zwischenfläche fest und großflächig miteinander verbunden. Die Oberfläche 6 der Polsterschicht 3 entspricht in ihrem Verlauf der Unterfläche 7 einer Brandsohle 8, die nach einem üblichen Zwickverfahren am Außenleder 9 eines Oberschuhs 10 befestigt wurde.

Wie insbesondere aus den Fig. 1 und 2 ersichtlich, sind die beiden Sohlenschichten 2, 3 durch Ausbildung der oberen Laufsohlenfläche 4 bzw. der unteren Polstersohlenfläche 5 so geformt, daß im hinteren Sohlenteil ein Fersenbeinbett 11, daran nach vorn anschließend eine Gelenkstütze 12, eine Mittelfußknochen- oder Quergewölbestütze 13, ein Bett für die Zehenballen 14, eine Zehenbeugestütze 15 und ein Zehengreifbett 16 vorhanden sind. Wie in Fig. 2 in Draufsicht dargestellt, gehen die entsprechenden Vertiefungen bzw. Erhöhungen der Laufsohlenschicht 2 allmählich ineinander über. Die obere weichelastische Polsterschicht erstreckt sich bis zu den sichtbaren Sohlenrandkanten.

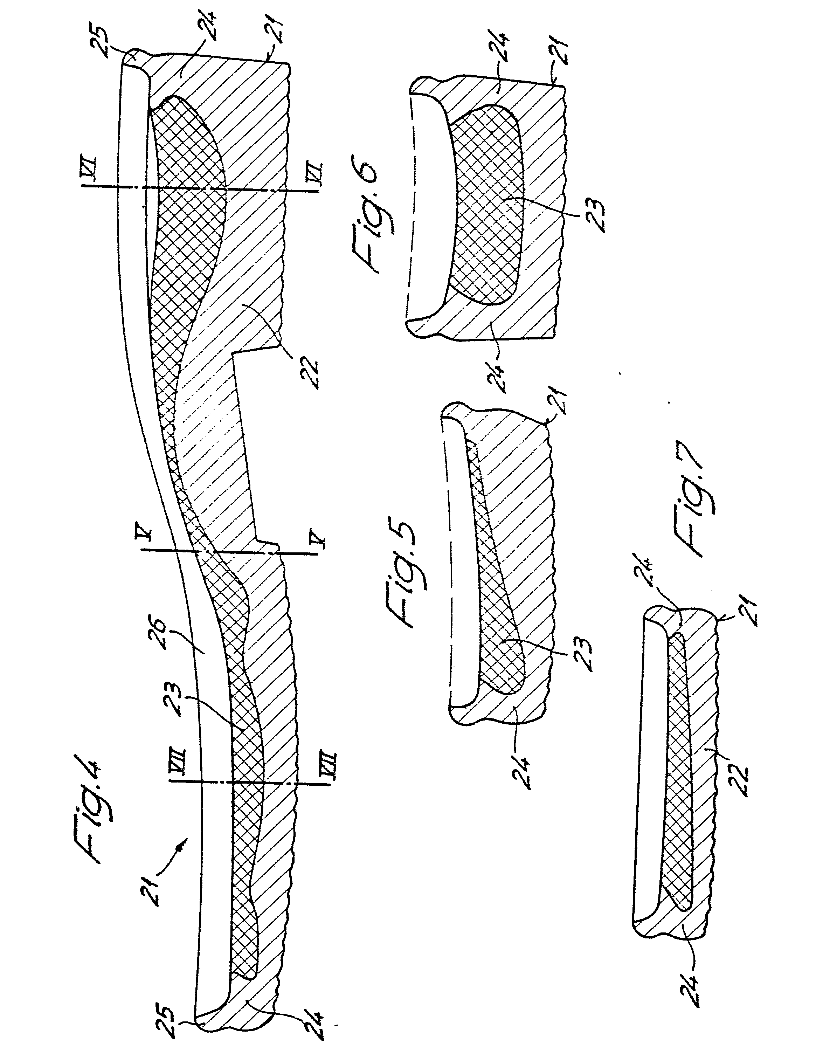

Die Sohlenausführung nach den Fig. 4 bis 7 entspricht in ihrem grundsätzlichen Aufbau der Polstersohle nach den Fig. 1 bis 3. Sie unterscheidet sich lediglich durch eine andere Ausbildung im Bereich der Sohlenränder. Wie ersichtlich, erstreckt sich die obere Polsterschicht 23 nicht bis zu den seitlichen Randkanten der Polstersohle 21, sondern wird allseitig von einem hochgezogenen Rand 24 aus dem zähelastischen Material der unteren Formsohle 22 umschlossen. Diese Randbereiche 24 der Laufsohlenschicht können nach oben zu schmaleren Rändern 25 verlängert werden, wodurch sich eine sog. Schalensohle mit einem Bett 25 zur Aufnahme eines Oberschuhes ergibt. Diese Sohlenausführung ist insbesondere · für hochbeanspruchtes Schuhwerk, wie Sport-, Arbeits- oder Sicherheitsschuhe, geeignet. Die in Sohlenlängsrichtung sich ändernde Kontur und der an beiden Sohlenschichten 22 und 23 ist aus Fig. 4 und die sich in Sohlenquerrichtung ändernde Kontur der beiden Sohlenschichten in den verschiedenen Sohlenbereichen aus den Fig. 5, 6 bzw. 7 besonders klar ersichtlich.

Durch die in oben beschriebener Weise ausgebildeten Formsohlen wird nicht nur eine hohe Tragebequemlichkeit hinsichtlich der Abrollbewegung eines Fußes beim Gehen sondern auch eine wirksame seitliche Abstützung des Fußes aufgrund der sich über die verschiedenen Sohlenbereiche ändernden und durch entsprechende Auswahl der Verformungseigenschaften der beiden Schichtmaterialien feinfühlig einstellbaren Eigenschaften erreicht. Ein Schuh- bzw. Sohlenhersteller wird durch das erfindungsgemäße Prinzip die Möglichkeit an die Hand gegeben, Polstersohlen herstellen zu können, die hinsichtlich ihrer Trageigenschaften und Stützfunktionen sich selbsttätig den individullen Trägerfußformen anpassen, wobei entsprechend dem herzustellenden Schuhtyp, z. B. Sicherheitsschuhe oder Turnschuhe, entweder einer größeren Verformbarkeit und damit Anpassung an die Trägerfußform oder aber einer wirksameren orthopädischen Stützfunktion der Vorzug gegeben werden kann.

## Ansprüche

1. Polstersohle mit einer unteren verschleißfesten Laufsohlenschicht aus einem zähelastischen Kunststoff und aus einer oberen weichelastischen Polsterschicht aus einem Leichtschaum, wobei die Grenzfläche zwischen der unteren und der oberen Sohlenschicht einer in Fußlängsrichtung geschwungenen Kontur folgt, dadurch gekennzeichnet, daß die Grenzfläche (4, 5) zwischen der unteren Laufsohlenschicht (2) und der oberen Polsterschicht (3) auch in Sohlenquerrichtung eine fußorthopädische Kontur hat, wobei in der Laufsohlenschicht (22) im Bereich des Fersenbeinknochens eine bettartige Vertiefung (11), im Bereich des Fußgelenkes und des Mittelfußknochens sohleninnenseitig je eine Erhebung (12, 13), im Bereich des Zehenballens eine weitere Vertiefung (14) und unter der Zehenbeuge ein erhabener Riegel (15) vorgesehen sind und wobei die Polsterschicht (3, 23) eine sich entsprechend den Laufsohlen-Vertiefungen und -Erhebungen verändernde Dicke aufweist und mit ihrer glatten Oberfläche übergangslos an die Oberfläche der seitlichen Randbereiche der Laufsohlenschicht (2, 22) anschließt.

2. Polstersohle nach Anspruch 1, dadurch gekennzeichnet, daß die Laufsohlenschicht (22) seitlich hochgezogene Ränder (24, 25) aufweist, welche die Polsterschicht und den unteren äußeren Rand des Oberschuhs (10) seitlich einschließen.

## Claims

1. Padded sole comprising a wear-resistant lower walking sole layer of a tough elastic plastic material and a soft elastic padding layer of a lightweight foam, the interface between the lower and the upper sole layer following a contour which is curved in longitudinal direction of the foot, characterized in that the interface (4, 5) between the lower walking sole layer (2) and the upper padding layer (3) has orthopaedic contour also in transverse direction of the sole, wherein the walking sole layer (22) has a bed-like cavity (11) in the heel-bone area, a bulging portion (12, 13) each in the ankle and the metatarsal bone area on the inner side of the sole, a further concavity (14) in the area of the balls of the toes, and a raised web (15) beneath the toe bend, and wherein the thickness of the padding layer (3, 23) varies in accordance with the concavities and bulges of the walking sole and the plain surface of the padding layer smoothly joins the surface of the lateral edge portions of the walking sole layer (2, 22).

2. Padded sole as claimed in claim 1, characterized in that the walking sole layer (22) comprises border portions (24, 25) drawn up at the sides and laterally enclosing the padding layer and the lower outer edge of the upper shoe (10).

## Revendications

1. Semelle rembourrée comportant une couche inférieure, résistant à l'usure, formant la semelle proprement dite, en plastique à élasticité dure, et une couche supérieure rembourrée, à élasticité douce, en mousse légère, étant précisé que la surface limite entre la couche inférieure et la couche supérieure de la semelle suit un profil ondulant dans la direction longitudinale du pied, caractérisée en ce que la surface limite (4, 5) entre la couche inférieure (2) formant semelle proprement dite et la couche supérieure rembourrée (3) présente également dans la direction transversale de la semelle un profil orthopédique, étant précisé que dans la couche (22) formant la semelle proprement dite il est prévu dans la zone du calcanéum un creux (11) formant surface de repos, dans la zone de l'articulation du pied et dans la zone métatarsienne, côté intérieur de la semelle, chaque fois un renflement (12, 13), dans la zone digitoplantaire un autre creux (14) et sous la zone de flexion des orteils une barre saillante (15) ; et étant précisé que la couche rembourrée (3, 23) présente une épaisseur qui se modifie en fonction des creux et des renflements de la semelle proprement dite et qu'elle se raccorde, par sa face supérieure lisse, sans transition, à la face supérieure des zones latérales de bordure de la couche (2, 22) constituant la semelle proprement dite.

2. Semellle rembourrée selon la revendication 1, caractérisée en ce que la couche (22) formant la semelle proprement dite présente latéralement des bords relevés (24, 25) qui enferment latéralement la couche rembourrée et le bord extérieur inférieur de l'empeigne (10).

Fig.1

10

5 6 7 8

3

1

2

16 15 14 13 12 11 4

8

9 9

3

2

Fig.3

Fig.2

15 14 13 12 III

16 III 11

0 048 965

Fig.4

Fig.5

Fig.6

Fig.7